# EUROPÄISCHE PATENTANMELDUNG

(11) **EP 0 991 284 A2**
(43) Veröffentlichungstag der Anmeldung: **05.04.2000**
(21) Anmeldenummer: 99440220.4
(22) Anmeldetag: 06.08.1999
(51) Int. Cl.: H04Q 3/00

(54) **Verfahren, Dienststeuerungseinheit, Dienstvermittlungsstelle und Kombinationsknoten zum Bereitstellen von Telekommunikationsdiensten**

(30) Priorität: 30.09.1998 DE 19844825
(71) Anmelder: ALCATEL, 75008 Paris (FR)
(72) Erfinder: Daase, Deflef, Dr., 12205 Berlin (DE); Kiel, Friedrich, 61462 Köningstein (DE); Legat, Karl-Heinz, 71272 Renningen (DE); Stahl, Bernd, 70193 Stuttgart (DE)
(74) Vertreter: Brose, Gerhard, Dipl.-Ing.

(57) **Zusammenfassung**

Die vorliegende Erfindung betrifft ein Verfahren zum Bereitstellen von Telekommunikationsdiensten in einem Telekommunikationsnetz sowie eine Dienststeuerungseinheit (LSCP), eine Dienstvermittlungsstelle (LSSP) und einen Kombinationsknoten (LSCP, LSSP) hierfür. Bei dem Verfahren tauschen eine Dienststeuerungseinheit (LSCP) und eine Dienstvermittlungsstelle (LSSP) über eine Schnittstelle (IFSC, IFSS) Daten aus, mit denen die Dienststeuerungseinheit und die Dienstvermittlungsstelle (LSSP) durch Zusammenwirken Telekommunikationsdienstfunktionen (SSF, SCF) erbringen können. Dazu wird vorgeschlagen, daß die Dienststeuerungseinheit und die Dienstvermittlungsstelle über die Schnittstelle solche Daten austauschen, mit denen die Telekommunikationsdienstfunktionen in einem Funktionsumfang erbracht werden können, der über einen durch Standardisierung festgelegten Funktionsumfang hinausgeht, und daß die Dienststeuerungseinheit und die Dienstvermittlungsstelle durch Zusammenwirken diese Telekommunikationsdienstfunktionen erbringen.

## Beschreibung

Die vorliegende Erfindung betrifft ein Verfahren zum Bereitstellen von Telekommunikationsdiensten in einem Telekommunikationsnetz gemäß dem Oberbegriff des Anspruchs 1, sowie eine Dienststeuerungseinheit gemäß dem Oberbegriff des Anspruchs 8 hierfür, eine Dienstvermittlungsstelle gemäß dem Oberbegriff des Anspruchs 9 hierfür und einen Kombinationsknoten gemäß dem Oberbegriff des Anspruchs 10 hierfür.

Die Erfindung geht von der Erbringung von Telekommunikationsdiensten gemäß der IN Architektur (IN = Intelligent Network) aus, wie sie beispielsweise in dem Artikel "Intelligent Network", Nachrichtentechnik, Elektronik, Berlin 40, 1990, Seiten 162 bis 164 beschrieben ist.

Ein globaler Dienststeuerknoten, ein sogenannter SCP (Service Control Point), ist über das Zentrale Zeichengabenetz Nr. 7 mit mehreren Dienstvermittlungsstellen, sogenannten SSPs (Service Switching Points) verbunden. Der Dienststeuerknoten steuert für die mit ihm verbundenen Dienstvermittlungsstellen zentral die Erbringung von einem oder von mehreren Telekommunikationsdiensten. Bei den Dienstvermittlungsstellen handelt es sich um speziell ausgestattete Vermittlungsstellen eines Telekommunikationsnetzes. Empfängt eine dieser Vermittlungsstellen von einem Teilnehmer des Telekommunikationsnetzes eine spezielle Verbindungsanforderung, so wird eine in der Vermittlungsstelle integrierte Dienstvermittlungsfunktion angesprochen, die dann eine Dienstanforderungsnachricht an den globalen Dienststeuerknoten sendet. Diese Dienstanforderungsnachricht triggert im Dienststeuerknoten die ihr zugeordnete Dienstelogik, die dann die Erbringung des Telekommunikationsdienstes steuert, indem sie beispielsweise die Dienstvermittlungsstelle anweist, die Verbindungsanforderung mit einer anderen Zielrufnummer weiterzuvermitteln oder ein Dienstunterstützungssystem ansteuert, das Sprachansagen ausgibt.

In der ITU-T Recommendation Q.1215 (10/95) "Physical Plane for Intelligent Network CS-1" ist auf Seite 3 ein Kombinationsknoten aus Dienststeuerungseinheit und Dienstvermittlungsstelle, ein sogenannter SSCP (Service Switching and Control Point) beschrieben. Dieser SSCP erbringt sowohl die standardisierten Funktionen eines SCPs als auch die standardisierten Funktionen eines SSPs. SCP-Funktionen und SSP-Funktionen sind dabei "proprietär und eng" miteinander gekoppelt, da die Kommunikation zwischen den Funktionen nicht wie bei separaten Einheiten SCP und SSP über eine standardisierte Schnittstelle, z.B. zu dem genannten Zentrale Zeichengabenetz Nr. 7, und damit auch nicht über ein dafür erforderliches standardisiertes Kommunikationsprotokoll erfolgen muß. Insgesamt jedoch bieten die SCP-Funktionen und SSP-Funktionen des SSCPs den gleichen Funktionsumfang ("service capability"), wie es bei separaten Einheiten SCP und SSP der Fall ist. Die Schnittstellen des SSCPs zu weiteren Einrichtungen ("Physical entities") eines Intelligenten Netzwerkes sind laut der ITU-T Recommendation Q.1215 entsprechend den Schnittstellen eines SSPs zu solchen weiteren Einrichtungen. Der SSCP verhält sich also funktional innerhalb eines Intelligenten Netzwerkes wie ein SSP.

Aufgabe der Erfindung ist es, die Funktionalität eines Kombinationsknotens aus einer Dienststeuerungseinheit und einer Dienstvermittlungsstelle zu erweitern.

Diese Aufgabe wird durch ein Verfahren zum Bereitstellen von Telekommunikationsdiensten in einem Telekommunikationsnetz gemäß der technischen Lehre des Anspruchs 1, sowie eine Dienststeuerungseinheit gemäß der technischen Lehre des Anspruchs 8, eine Dienstvermittlungsstelle gemäß der technischen Lehre des Anspruchs 9 und einen Kombinationsknoten gemäß der technischen Lehre des Anspruchs 10 gelöst. Weitere vorteilhafte Ausgestaltungen der Erfindung sind den abhängigen Ansprüchen und der Beschreibung zu entnehmen.

Der Erfindung liegt hierbei der Gedanke zugrunde, einerseits durch Standardisierung vorgegebene Funktionsleistungsmerkmale durch eine Kombination aus einer erfindungsgemäßen Dienststeuerungseinheit und einer erfindungsgemäßen Dienstvermittlungsstelle zu erbringen, andrerseits zusätzlich weitere Funktionen zu erbringen, die durch Standardisierung nicht definiert sind. Diese Funktionserweiterung wird insbesondere durch die Verwendung einer nicht auf den Standard begrenzten internen Schnittstelle zwischen Dienststeuerungseinheit und Dienstvermittlungsstelle erleichtert. Über diese interne Schnittstelle können Daten zwischen Dienstvermittlungsstelle und Dienststeuerungseinheit unabhängig von einem durch Standardisierung vorgegebenen Protokoll ausgetauscht werden.

Weiterhin werden vorteilhafterweise zumindest die standardisierten Funktionen der erfindungsgemäßen Dienststeuerungseinheit auch weiteren externen Dienstvermittlungsstellen zugänglich gemacht. Dabei werden in einer Variante externe Dienstvermittlungsstellen direkt an die Dienststeuerungseinheit angekoppelt. In einer anderen Variante kann sich die Dienststeuerungseinheit jedoch auch der Kommunikationsmittel der intern angekoppelten Dienstvermittlungsstelle bedienen und über diese Dienstvermittlungsstelle mit den externen Dienstvermittlungsstellen kommunizieren.

Im folgenden werden die Erfindung und ihre Vorteile anhand eines Ausführungsbeispiels unter Zuhilfenahme der Zeichnungen dargestellt.
- Figur 1: zeigt eine Anordnung mit einer erfindungsgemäßen Dienststeuerungseinheit LSCP und einer erfindungsgemäßen Dienstvermittlungsstelle LSSP, mit der das erfindungsgemäße Verfahren ausgeführt werden kann.
- Figur 2: zeigt eine Anordnung aus einem erfindungsgemäßen Kombinationsknoten aus einer Dienststeuerungseinheit LSCP und einer Dienstvermittlungsstelle LSSP, an die weitere Dienstvermittlungsstellen SSP1 und SSP2 angeschlossen sind.

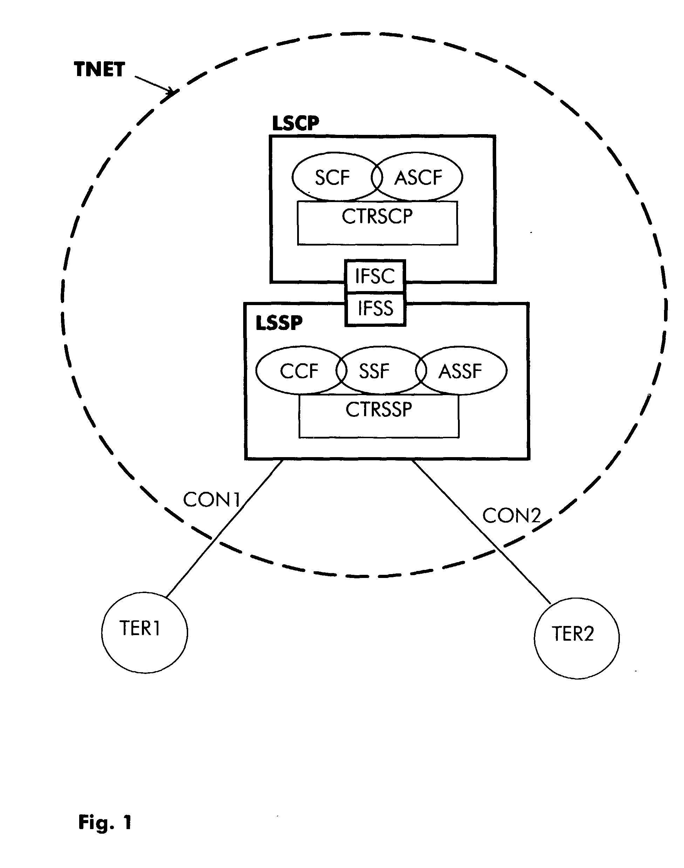

Figur 1 zeigt eine Dienstvermittlungsstelle LSSP und eine Dienststeuerungseinheit LSCP, die über eine Schnittstelleneinheit IFSC auf Seiten der Dienststeuerungseinheit LSCP und eine Schnittstelleneinheit IFSS auf Seiten der Dienstvermittlungsstelle LSSP miteinander verbunden sind. Die Dienstvermittlungsstelle LSSP erfüllt innerhalb eines Telekommunikationsnetzes TNET, das im vorliegenden Ausführungsbeispiel ein sogenanntes Intelligentes Netz (IN) ist, die Aufgaben einer Vermittlungsstelle, z.B. in der Funktion einer Ortsvermittlungsstelle oder auch einer Transitvermittlungsstelle. Die Dienstvermittlungsstelle LSSP erbringt weiterhin Funktionen eines sogenannten Service Switching Points (SSP), so daß über die Dienstvermittlungsstelle LSSP Dienste des Intelligenten Netzes angesprochen und abgerufen werden können. Es ist natürlich auch möglich, daß es sich bei der Dienstvermittlungsstelle LSSP um einen Vermittlungsknoten handelt, der neben Fernsprechverbindungen auch Bildfernsprechverbindungen oder Datenverbindungen vermittelt. Bei der Dienstvermittlungsstelle LSSP kann es sich z.B. um einen Vermittlungsknoten Alcatel 1000 S12 handeln.

Die Dienstvermittlungsstelle LSSP verfügt über Anschlußbaugruppen zum Anschluß von Teilnehmeranschlußleitungen oder Anschlußleitungen zu anderen Vermittlungsknoten des Telekommunikationsnetzes TNET, über ein Koppel netz zum Schalten von Verbindungen zwischen den Anschlußbaugruppen und über eine Steuerung CTRSSP, die unter anderem den Aufbau von Verbindungen und die Signalisierung mit Teilnehmern und anderen Vermittlungsknoten steuert. Es ist auch möglich, daß Anschlußbaugruppen dem Anschluß mobiler Teilnehmer dienen. An die Dienstvermittlungsstelle LSSP sind beispielhaft ein Endgerät TER1 über eine Kommunikationsverbindung CON1 und ein Endgerät TER2 über eine Kommunikationsverbindung CON2 angeschlossen. Die Kommunikationsverbindungen CON1 und CON2 können jeweils über weitere, in Figur 1 nicht dargestellte Einrichtungen des Telekommunikationsnetzes TNET führen, z.B. über Zugangseinrichtungen und weitere Vermittlungsstellen. Auf eine detaillierte Darstellung der einzelnen Baugruppen der Dienstvermittlungsstelle LSSP, wie z.B. das erwähnte Koppelnetz und die erwähnten Anschlußbaugruppen wird in Figur 1 verzichtet, da sie aus üblichen Vermittlungsstellen bekannt sind. Lediglich die Steuerung CTRSSP der Dienstvermittlungsstelle LSSP ist in Figur 1 eigens dargestellt, da sie, wie später noch deutlich wird, im vorliegenden Ausführungsbeispiel wesentliche Funktionen der Dienstvermittlungsstelle LSSP erfüllt.

Die Steuerung CTRSSP basiert auf einem Rechnersystem, das einen leistungsstarken Zentralrechner enthält oder aus mehreren, über ein internes Kommunikationsnetz verbundenen Einzelrechnern aufgebaut ist. Dieses Rechnersystem wird von einem Betriebssystem betrieben, das die Ausführung von Steuerprogrammen ermöglicht, die die Funktionen der Dienstvermittlungsstelle LSSP steuern. Das Betriebssystem ist hierbei vorteilhafterweise ein speziell für die Anforderungen eines Vermittlungsknotens zugeschnittenes Echtzeitbetriebssystem. Von den von diesen Steuerprogrammen erbrachten Funktionen sind in Fig. 1 schematisch drei miteinander verzahnte Funktionen CCF, SSF und ASSF dargestellt. Die Darstellung in Funktionen CCF und SSF folgt der Darstellung gleichnamiger Funktionen in der schon erwähnten ITU-T Recommendation-Q.1215. Die Abkürzung "CCF" der Funktion CCF steht für den Begriff "Call Control Function", also für eine Ruf- und Verbindungssteuerung wie sie in bekannter Weise von einer Vermittlungsstelle ausgeführt wird. Die Abkürzung "SSF" der Funktion SSF steht für "Service Switching Function", also für Dienstanschaltfunktionen der Dienstvermittlungsstelle LSSP, mit denen Dienstfunktionen eines Intelligenten Netzes abgerufen werden können. Die eng verzahnte Zusammenwirkung der Funktionen CCF und SSF ist durch sich überschneidende Ellipsen angedeutet. Sowohl der Funktionsumfang der Funktion CCF als auch der Funktionsumfang der Funktion SSF sind jeweils durch Standardisierung definiert. Die Funktion ASSF stellt eine Ergänzung der Funktion SSF um eine weitere, nicht standardisierte Funktion dar, auf die später noch eingegangen wird. Es ist auch möglich, daß die Funktion ASSF in die Funktion SSF integriert ist, also eine Erweiterung der Funktion SSF darstellt. Im Interesse einer anschaulichen Darstellung sind die Funktionen SSF und ASSF jedoch in Figur 1 als getrennte, jedoch eng verzahnte Einheiten gezeigt.

An die Dienstvermittlungsstelle LSSP ist die Dienststeuerungseinheit LSCP angekoppelt. Die Dienststeuerungseinheit LSCP weist eine Steuerung CTRSCP auf, die von einem oder mehreren miteinander verbundenen Rechnern gebildet wird. Diese Rechner werden von einem Betriebssystem betrieben, z.B. einem UNIX Betriebssystem, das mit Hilfe einer "Middleware" genannten Software, z.B. der Alcatel Nectar Telecom Middleware, an funktionale Erfordernisse der Dienststeuerungseinheit LSCP angepaßt ist. Die Steuerung CTRSCP führt Steuerprogramme aus, von deren Funktionen beispielhaft die Funktion SCF und die Funktion ASCF in Figur 1 dargestellt sind. Die Funktion SCF stellt eine Dienststeuerungfunktion dar, eine sogenannte "Service Control Function". Die Bezeichnung "SCF" ist an eine gleichnamige Funktionsbezeichnung in der schon erwähnten ITU-T Recommendation Q.1215 angelehnt. Der Leistungsumfang der Funktion SCF ist durch Standardisierung definiert. Zusätzlich führt die Dienststeuerungseinheit LSCP weitere, nicht standardisierte Telekommunikationsdienstfunktionen aus. Diese sind in Form der Funktion ASCF in Figur 1 dargestellt und werden noch näher erläutert. Wie im Zusammenhang mit den Funktionen ASSF und SSF der Dienstvermittlungsstelle LSSP erläutert, kann die Funktion ASCF eine eigenständige Funktion sein oder auch in die Funktion SCF integriert werden.

Die Funktion SSF überwacht Verbindungsanforderungen von Teilnehmern des Telekommunikationsnetzes TNET, die über die Dienstvermittlungsstelle LSSP geleitet werden. Wenn z.B. von dem Endgerät TER1 aus eine Verbindungsanforderung an die Dienstvermittlungsstelle LSSP gesendet wird, wird diese Verbindungsanforderung zunächst von der Funktion CCF erfaßt. Die Funktion CCF leitet die Verbindungsanforderung an die Funktion SSF weiter. Die Funktion SSF ermittelt dann anhand der Verbindungsanforderung, ob die Ausführung eines Telekommunikationsdienstes verlangt wird. Kriterium für eine Anforderung eines Telekommunikationsdienstes kann beispielsweise die in die Verbindungsanforderung eingetragene Rufnummer des gerufenen Teilnehmers oder auch die Rufnummer des rufenden Teilnehmers sein.

Zur Erbringung eines angeforderten Telekommunikationsdienstes sendet die Funktion SSF über die Schnittstelleneinheit IFSS eine Anfrage an die Funktion SCF z.B. mit Hilfe des INAP Protokolls (INAP = Intelligent Network Applications Protocol), mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie grundlegende Dienste und Aktionen dieses Protokolls werden beispielsweise in der Empfehlung ITU-T Q.1219, "Intelligent Network User's Guide for Capability Set 1" im Kapitel 6.5, "Intelligent Network Applications Protokoll (INAP)", auf den Seiten 26 bis 34 erläutert. Die genannte Empfehlung ITU-T Q.1219 bezieht sich dabei auf das sogenannte Capability Set 1(CS-1), das einen bestimmten Umfang von Telekommunikationsdiensten innerhalb eines Intelligenten Netzes und deren Leistungsmerkmale definiert. Eine Einführung in diese Dienste gibt die ITU-T Recommendation Q.1211 "Introduction to Intelligent Network Capability Set 1". Die Standardisierung von Telekommunikationsdiensten ist inzwischen bis zu einem sogenannten "Capability Set 2" fortgeschritten und wird in weitere "Capability Sets" fortentwickelt.

Nachdem die Funktion SCF die Anfrage von der Funktion SSF über die Schnittstelleneinheit IFSC empfangen hat, interpretiert sie diese und antwortet der Funktion SSF mit einer Antwortnachricht, ebenfalls z.B. mit dem erwähnten INAP-Protokoll. Wenn sich die Anfrage z.B. im Zusammenhang mit dem Telekommunikationsdienst "Rufumleitung" ("Call forwarding (CF)"), beschrieben auf Seite 19 der ITU-T Recommendation Q.121 1, auf eine mögliche Umleitung anstatt zu der Rufnummer des Endgerätes TER2 zu einer alternativen Rufnummer bezieht, sendet die Funktion SCF in der Antwortnachricht als Parameter für einen weiteren Rufaufbau die alternative Rufnummer. Die Funktion SSF empfängt dann die Antwortnachricht und instruiert die Funktion CCF mit dem Parameter "alternative Rufnummer", so daß die Funktion CCF die obengenannte Verbindungsanforderung erfüllen und das Endgerät TER1 mit einem in Figur 1 nicht dargestellten Endgerät unter der alternativen Rufnummer verbinden kann.

Weitere Dienste des "Capability Set 1" sind z.B. eine Identifizierung böswilliger Anrufer ("Malicious Call Identification (MCI)"), Kurzwahl ("Abbreviated Dialling (ABD)") oder Bezahlung eines Rufes durch den Angerufenen ("reverse charging/Freephone (FPH)"). Die Dienstvermittlungsstelle LSSP und die Dienststeuerungseinheit LSCP können auch für Dienste des "Capability Sets 2" ausgelegt sein. Ein Dienst des "Capability Sets 2" ist z.B. ein automatischer Rückruf an den Anrufer, der zuletzt angerufen hat ("Automatic Call Back (ACB))". Neben standardisierten, durch "Capability Sets" definierten Telekommunikationsdiensten können die Dienstvermittlungsstelle LSSP mit Hilfe der Funktion ASSF und die Dienststeuerungseinheit LSCP mit Hilfe der Funktion ASCF jedoch auch weitere Telekommunikationsdienste erbringen, die nicht zur Standardisierung geeignet sind oder zwar für eine mögliche Standardisierung vorgesehen, aber noch nicht standardsiert sind. Dies wird insbesondere dadurch ermöglicht, daß die Schnittstelle zwischen Dienstvermittlungsstelle LSSP und Dienststeuerungseinheit LSCP eine interne Schnittstelle ist. Dadurch müssen die Dienstvermittlungsstelle LSSP und die Dienststeuerungseinheit LSCP für den nur sie betreffenden Datenverkehr nicht ein vorgegebenes, für weitere Einrichtungen des Telekommunikationsnetzes TNET verständliches Protokoll, z.B. das genannte INAP-Protokoll einhalten, sondern können mit Hilfe eines proprietären Protokolles die für die Erbringung der zusätzlichen, nicht standardisierten Telekommunikationsdienstfunktionen nötigen Daten austauschen. Dabei können z.B. Elemente des INAP-Protokolles auf eine intern zwischen der Dienstvermittlungsstelle LSSP und der Dienststeuerungseinheit LSCP definierte Weise interpretiert werden. Ein solches proprietäres Protokoll kann aber auch vorteilhaft auf der Grundstruktur des INAP-Protokolles aufbauen und um einige Protokollelemente zur Erbringung nicht standardisierter Telekommunikationsdienstfunktionen erweitert sein. Weiterhin ist es auch möglich, daß die Dienstvermittlungsstelle LSSP und die Dienststeuerungseinheit LSCP anstatt mit einem auf standardisierten Protokollelementen aufbauenden Protokoll über ein eigens für die Kommunikation zwischen Dienstvermittlungsstelle LSSP und Dienststeuerungseinheit LSCP definiertes und von Standards losgelöstes Protokoll Daten austauschen. Auch an sich durch Standards definierte Telekommunikationsdienstfunktionen können die Dienstvermittlungsstelle LSSP und die Dienststeuerungseinheit LSCP durch solch ein proprietäres Protokoll auf eine Weise lösen, die von einem Standard in dieser Lösungsweise nicht vorgesehen sind.

Ein durch Standardisierung nicht vorgesehener Dienst, den die Dienstvermittlungsstelle LSSP und die Dienststeuerungseinheit LSCP erbringen können, ist z.B., wenn bei der erwähnten Rufumleitung zusätzlich noch bestimmt wird, über welchen Weg der umzuleitende Ruf an die alternative Rufnummer umgeleitet werden soll oder zu welchen Tarifbedingungen der Ruf umgeleitet werden soll. Die Funktion ASSF kann die dafür erforderlichen Parameter bei der Funktion ASCF erfragen und anschließend die Funktion CCF mit diesen Parametern instruieren. Es können auch weitere, hier nicht genannte Telekommunikationsdienste definiert und nach Anpassung der Funktionen ASSF und ASCF von der Dienstvermittlungsstelle LSSP und der Dienststeuerungseinheit LSCP erbracht werden.

Durch die enge Kopplung der Dienstvermittlungsstelle LSSP und der Dienststeuerungseinheit LSCP ergibt sich auch die Möglichkeit, nicht nur Parameter zu erfragen und auszutauschen, sondern es können auch Funktionsanteile zur Ergänzung der Funktionen der Dienstvermittlungsstelle LSSP von der Dienststeuerungseinheit LSCP an die Dienstvermittlungsstelle LSSP gesendet werden. Ein solcher Funktionsanteil besteht aus von einem Prozessor ausführbaren Maschinencode, der von der Steuerung CTRSSP geladen und in die Funktion CCF oder die Funktion SSF eingebunden werden kann. Ein solches Verfahren ist beispielsweise vergleichbar mit dem bedarfsabhängigen Einbinden von sogenannten "Dynamic Link Libraries (DLL)" unter Microsoft Windows. Auch dort werden Teile eines von einem Prozessor ausführbaren Maschinencodes in Form von Funktionen nur dann von einem Speichermedium, z.B. einer Festplatte, geladen und in den bereits in Ausführung befindlichen Maschinencode eingebunden, wenn die Funktionen tatsächlich gebraucht werden. In ähnlicher Weise kann auch die Funktion ASCF Funktionsanteile an die Funktion ASSF senden, die dann diese Funktionsanteile in die Funktion CCF oder die Funktion SSF integriert. Durch eine Integration von Funktionsanteilen in die Funktion CCF kann die Rufsteuerung der Dienstvermittlungsstelle LSSP speziell für die Erbringung eines bestimmten Telekommunikationsdienstes dynamisch modifiziert werden. Die integrierten Funktionsanteile werden von der Steuerung CTRSSP ausgeführt. Die Funktionsanteile können auch anstatt in einem von der Steuerung CTRSSP unmittelbar ausführbaren Maschinencode in einem zu interpretierenden Programmcode verfaßt sein, z.B. in Form von sogenannten Applets der Programmiersprache JAVA. Solche JAVA-Applets bestehen aus einem aus compiliertem Quelltext erzeugten Zwischencode, den die Steuerung CTRSSP mit einem JAVA-lnterpreter in Maschinencode übersetzt. Dieses Maschinencode-Programm führt die Steuerung CTRSSP anschließend aus.

Durch die enge Kopplung der Dienstvermittlungsstelle LSSP und der Dienststeuerungseinheit LSCP ist es z.B. auch möglich, daß die Funktion ASCF die Funktion ASSF anweist, die weitere Bearbeitung der erwähnten Verbindungsanforderung anstelle der Funktion CCF vollständig zu übernehmen. Ebenso kann die Funktion ASCF selbst die weitere Bearbeitung der Verbindungsanforderung von der Funktion CCF übernehmen, so daß die Rufbearbeitung von der Dienstvermittlungsstelle LSSP zu der Dienststeuerungseinheit LSCP übergeht. Letzteres ist insbesondere dann sinnvoll, wenn die Dienststeuerungseinheit LSCP ein in Figur 1 nicht dargestelltes Dienstunterstützungssystem, z.B. ein Spracherkennungsystem für Sprachansagen oder Spracherkennung in Anspruch nimmt.

Sollen für den Datenaustausch zwischen Dienstvermittlungsstelle LSSP und Dienststeuerungseinheit LSCP weitere, durch Standardisierung definierte Protokollschichten eingehalten werden, können die INAP Nachrichten mittels des TCAP Protokolls (TCAP = Transport Capabilities Application Part) transportiert werden, das seinerseits wiederum mittels des sogenannten SCCP Protokolles (SCCP = Signalling Connection Control Part) übertragen werden kann. Die Schnittstelleneinheit IFSS der Dienstvermittlungsstelle LSSP und die Schnittstelleneinheit IFSC der Dienststeuerungseinheit LSCP erfüllen dann jeweils die Aufgaben einer Protokollbearbeitungseinheit zur sende- und empfangsseitigen Abwicklung vorgenannter Protokollebenen.

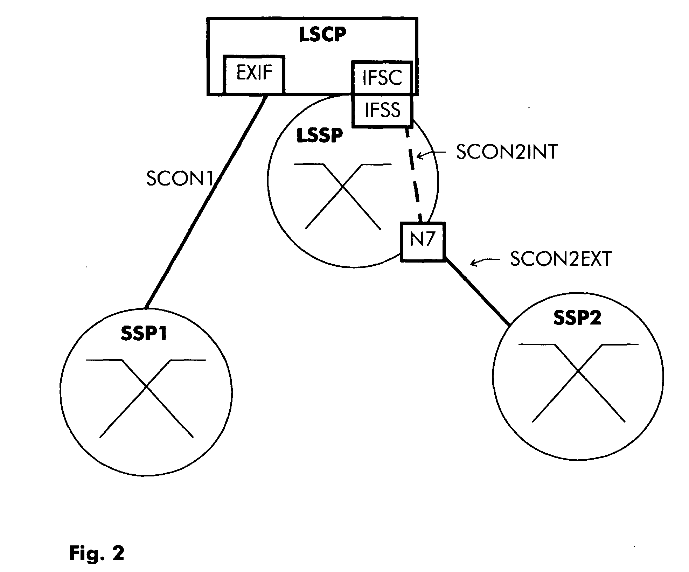

Die weitgehende Verwendung möglichst zahlreicher standardisierter Protokollebenen erlaubt zwar eine genauere Trennung zwischen den Funktionen der Dienstvermittlungsstelle LSSP einerseits und der Funktionen der Dienststeuerungseinheit LSCP andrerseits und erlaubt außerdem eine leichtere Anbindung weiterer Komponenten an die Dienststeuerungseinheit LSCP, wie im Zusammenhang mit Figur 2 noch erläutert wird. Es kann aber auch im Interesse eines schnellen und unkomplizierten Datenaustausches sinnvoll sein, daß die Dienstvermittlungsstelle LSSP und Dienststeuerungseinheit LSCP mit einem möglichst einfachen und knappen proprietären Protokoll kommunizieren.

Figur 2 zeigt eine weitere Steigerung der Funktionalität der mit der aus Figur 1 bekannten Dienststeuerungseinheit LSCP allein oder in Verbindung mit der ebenfalls aus Figur 1 bekannten Dienstvermittlungsstelle LSSP. In Figur 2 werden die Funktionen der Dienststeuerungseinheit LSCP weiteren Dienstvermittlungsstellen SSP1 und SSP2 zugänglich gemacht.

Die Dienstvermittlungsstelle SSP1 ist über eine Schnittstelleneinheit EXIF und eine Verbindung SCON1 an die Dienststeuerungseinheit LSCP angebunden. Die Schnittstelle EXIF kann wie die aus Figur 1 bekannte Schnittstelle zwischen der Dienstvermittlungsstelle LSSP und der Dienststeuerungseinheit LSCP eine interne Schnittstelle sein, so daß die Dienstvermittlungsstelle SSP1 in einem ähnlichen Funktionalitätsumfang wie die Dienstvermittlungsstelle LSSP an die Dienststeuerungseinheit LSCP angebunden sein kann. Eine solche interne Kopplung ist insbesondere dann vorteilhaft, wenn die Dienstvermittlungsstelle LSSP und die Dienstvermittlungsstelle SSP1 in räumlichem Sinne eine gemeinsame Vermittlungsstelle bilden, sich z.B. im gleichen Gebäude befinden. Die Dienststeuerungseinheit LSCP und die Dienstvermittlungsstellen LSSP und SSP1 können dann z.B. über ein LAN (Local Area Network) mit Hilfe eines TCP/IP Protokolles (Transmission Control Protocol/Internet Protocol) miteinander kommunizieren, auf dem die erwähnten INAP-Nachrichten oder auch Nachrichten in einem proprietären Datenformat transportiert werden. Die Dienstvermittlungsstelle SSP1 kann bei einer solchen Anbindung an die Dienststeuerungseinheit LSCP Telekommunikationsdienstfunktionen in ähnlichem, ebenfalls nicht durch Standards definiertem Umfang erbringen wie die Dienstvermittlungsstelle LSSP.

Die Dienstvermittlungsstelle SSP1 kann jedoch auch eine Dienstvermittlungsstelle sein, deren Funktionen und Schnittstellen zum Telekommunikationsnetz TNET weitgehend konform zu den jeweiligen Standards eines Intelligenten Netzes sind. Die Dienstvermittlungsstelle SSP1 leistet dann Funktionen, die den standardisierten Funktionen SSF und CCF, nicht jedoch der Funktion ASSF der aus Figur 1 bekannten Dienstvermittlungsstelle LSSP entsprechen. Die Dienststeuerungseinheit LSCP bietet ihrerseits die aus Figur 1 bekannte standardisierte Funktion SCF der Dienstvermittlungsstelle SSP1 an. Die Verbindung SCON1 führt dann über einen zwischen Vermittlungsstellen üblicherweise verwendeten Signalisierungskanal, z.B. auf dem schon erwähnten Zentralen Zeichengabenetz Nr. 7. Für den Datenaustausch verwenden die Dienstvermittlungsstelle SSP1 und die Dienststeuerungseinheit LSCP auf dem Zentralen Zeichengabenetz Nr. 7 übliche Protokolle, z.B. die erwähnten Protokolle INAP, TCAP und SCCP und weitere, hier nicht weiter erläuterte und im OSI Schichtenmodell tiefer angeordnete Protokollebenen (OSI = Open Systems Interconnection). Die Schnittstelleneinheit EXIF ist dann eine Protokollbearbeitungseinheit zur sende- und empfangsseitigen Abwicklung der vorgenannten Protokolle.

Üblicherweise verfügt eine Vermittlungsstelle ohnehin über eine Protokollbearbeitungseinheit, über welche die Vermittlungsstelle auf dem Zentralen Zeichengabenetz mit weiteren Vermittlungsstellen z.B. zum Verbindungsauf- und abbau kommunizieren kann. Auch die Dienstvermittlungsstelle LSSP in Figur 2 verfügt über eine solche als "Protokollbearbeitungseinheit N7" bezeichnete Protokollbearbeitungseinheit, die die Dienststeuerungseinheit LSCP für eine Kommunikation mit weiteren Dienstvermittlungsstellen vorteilhafterweise nutzen kann. Eine solche Kommunikation der Dienststeuerungseinheit LSCP über die Dienstvermittlungsstelle LSSP hinweg kann in Figur 2 mit der Dienstvermittlungsstelle SSP2 stattfinden. Die Dienstvermittlungsstelle SSP2 leistet Funktionen, die den standardisierten Funktionen SSF und CCF, der aus Figur 1 bekannten Dienstvermittlungsstelle LSSP entsprechen, die Dienststeuerungseinheit LSCP bietet diesen Funktionen die standardisierte Funktion SCF zur Zusammenwirkung an. Die Dienstvermittlungsstelle SSP2 ist mit der Dienststeuerungseinheit LSCP über eine Verbindung verbunden, die in einen Verbindungsabschnitt SCON21NT, dargestellt durch eine gestrichelte Linie, und einen Verbindungsabschnitt SCON2EXT aufgeteilt ist, der durch eine durchgezogene Linie dargestellt ist. Der Verbindungsabschnitt SCON21NT ist eine interne Verbindung innerhalb der Dienstvermittlungsstelle LSSP, der von der aus Figur 1 bekannten Schnittstelleneinheit IFSS zu der Protokollbearbeitungseinheit N7 führt. Von dort führt Verbindungsabschnitt SCON2EXT zu der Dienstvermittlungsstelle SSP2 weiter. Wie bereits im obigen Abschnitt im Zusammenhang mit der Verbindung SCON1 und dem Zentralen Zeichengabenetz erläutert, werden auch auf dem Verbindungsabschnitt SCON2EXT die auf dem Zentralen Zeichengabenetz Nr. 7 üblichen Protokolle verwendet, z.B. die erwähnten Protokolle INAP, TCAP und SCCP. Um die Kommunikation zwischen der internen Schnittstelle IFSS/IFSC und der Protokollbearbeitungseinheit N7 zu erleichtern, ist es deshalb besonders vorteilhaft, wenn die Dienststeuerungseinheit LSCP für die Dienstvermittlungsstelle SSP2 bestimmte Nachrichten bereits weitgehend auf den externen Versand auf dem Verbindungsabschnitt SCON2EXT vorbereitet, indem die Schnittstelleneinheit IFSC diese Nachrichten z.B. bereits in Form des INAP-Protokolles, besser noch zusätzlich in Form des TCAP-Protokolles und des SCCP-Protokolles an die Protokollbearbeitungseinheit N7 versendet. In Gegenrichtung nimmt die Dienststeuerungseinheit LSCP von der Dienstvermittlungsstelle SSP2 stammende Nachrichten von der Protokollbearbeitungseinheit N7 in diesen Protokollen entgegen.

Es ist aber auch möglich, daß anstatt der Schnittstelleneinheit IFSC die Schnittstelleneinheit EXIF mit der Schnittstelleneinheit IFSS der Dienstvermittlungsstelle LSSP verbunden wird. Die Schnittstelleneinheit EXIF muß dann lediglich für die Bearbeitung der nach dem OSI-Schichtenmodell höher liegenden Protokolle, also z.B. des INAP-Protokolles und des TCAP-Protokolles, geeignet sein. Die nach dem OSI-Schichtenmodell weiter unten liegenden Protokollebenen werden von der Protokoll bearbeitungseinheit N 7 bearbeitet.

In einer weiteren Ausführungsform der Erfindung kann die Dienstvermittlungsstelle LSSP über ihre Schnittstelleneinheit IFSS nicht nur mit der Dienststeuerungseinheit LSCP, sondern auch mit weiteren, in Figur 2 nicht dargestellten Dienststeuerungseinheiten verbunden sein, die wie die Dienststeuerungseinheit LSCP im Zusammenwirken mit der Dienstvermittlungsstelle LSSP jeweils Telekommunikationsdienstfunktionen - auch in nicht durch Standards definiertem Umfang - erbringen können. Eine solche Ankopplung mehrerer Dienststeuerungseinheiten an die Dienstvermittlungsstelle LSSP könnte z.B. über ein LAN erfolgen. Es ist dann auch möglich, daß die Dienststeuerungseinheit LSCP und die weiteren Dienststeuerungseinheiten nicht nur zusammen mit der Dienstvermittlungsstelle LSSP Telekommunikationsdienstfunktionen erbringen, sondern auch zusammen mit weiteren, ebenfalls an das LAN angeschlossenen Dienstvermittlungsstellen.

## Patentansprüche

1. Verfahren zum Bereitstellen von Telekommunikationsdiensten in einem Telekommunikationsnetz (TNET), in dem eine Dienststeuerungseinheit (LSCP) mit zumindest einer ersten Dienstvermittlungsstelle (LSSP) über eine (erste) Schnittstelle (IFSC, IFSS) verbunden ist und über die (erste) Schnittstelle (IFSC, IFSS) Daten ausgetauscht werden, mit denen die Dienststeuerungseinheit (LSCP) und die (erste) Dienstvermittlungsstelle (LSSP) durch Zusammenwirken (erste) Telekommunikationsdienstfunktionen (SSF, SCF) erbringen können,
**dadurch gekennzeichnet, daß** die Dienststeuerungseinheit (LSCP) und die (erste) Dienstvermittlungsstelle (LSSP) über die (erste) Schnittstelle (IFSC, IFSS) solche Daten austauschen, daß damit die (ersten) Telekommunikationsdienstfunktionen in einem Funktionsumfang erbracht werden können, der über einen durch Standardisierung festgelegten Funktionsumfang hinausgeht, und daß die Dienststeuerungseinheit (LSCP) und die (erste) Dienstvermittlungsstelle (LSSP) durch Zusammenwirken die (ersten) Telekommunikationsdienstfunktionen erbringen.

2. Verfahren nach Anspruch 1, dadurch gekennzeichnet, daß die Dienststeuerungseinheit (LSCP) zumindest mit einer zweiten Dienstvermittlungsstelle (LSSP) über eine zweite Schnittstelle (EXIF) verbunden wird, daß die Dienststeuerungseinheit (LSCP) über die zweite Schnittstelle (EXIF) mit der zweiten Dienstvermittlungsstelle (LSSP) Daten für zweite Telekommunikationsdienstfunktionen austauschen, deren Funktionsumfang durch Standardisierung festgelegt ist, und daß die Dienststeuerungseinheit (LSCP) und die zweite Dienstvermittlungsstelle (LSSP) durch Zusammenwirken die zweiten Telekommunikationsdienstfunktionen erbringen.

3. Verfahren nach Anspruch 2, dadurch gekennzeichnet, daß die Dienststeuerungseinheit (LSCP) Daten mit der zweiten Dienstvermittlungsstelle (LSSP) unter Zuhilfenahme von Kommunikationsmitteln (N7) der ersten Dienstvermittlungsstelle (LSSP) austauscht.

4. Verfahren nach Anspruch 1, dadurch gekennzeichnet, daß Daten, die zur Erbringung der ersten Telekommunikationsdienstfunktionen benötigt werden, über die erste Schnittstelle (IFSC, IFSS) in einem proprietären Datenformat übertragen werden.

5. Verfahren nach Anspruch 1, dadurch gekennzeichnet, daß Daten, die zur Erbringung der zweiten Telekommunikationsdienstfunktionen benötigt werden, über die zweite Schnittstelle (EXIF) in Form von INAP-Nachrichten übertragen werden.

6. Verfahren nach Anspruch 5, dadurch gekennzeichnet, daß die INAP-Nachrichten auf der Basis eines TCAP-Protokolles übertragen werden.

7. Verfahren nach Anspruch 1, dadurch gekennzeichnet, daß die Dienststeuerungseinheit (LSCP) Dienststeuerungsfunktionen erbringt (SCF), daß die erste Dienstvermittlungsstelle (LSSP) Dienstvermittlungsfunktionen (SSF) und Rufsteuerungsfunktionen (CCF) als Funktionen erbringt und daß die Dienststeuerungsfunktionen direkt in die Funktionen der ersten Dienstvermittlungsstelle (LSSP) eingreifen.

8. Dienststeuerungseinheit (LSCP) zum Bereitstellen von Telekommunikationsdiensten in einem Telekommunikationsnetz (TNET), wobei die Dienststeuerungseinheit (LSCP) über eine (erste) Schnittstelle (IFSC, IFSS) mit einer (ersten) Dienstvermittlungsstelle (LSSP) verbunden ist und wobei die Dienststeuerungseinheit (LSCP) Kommunikationsmittel (IFSC) aufweist, die so ausgestaltet sind, daß die Dienststeuerungseinheit (LSCP) über die (erste) Schnittstelle (IFSC, IFSS) Daten mit der (ersten) Dienstvermittlungsstelle (LSSP) austauschen kann, mit denen die Dienststeuerungseinheit (LSCP) und die (erste) Dienstvermittlungsstelle (LSSP) durch Zusammenwirken (erste) Telekommunikationsdienstfunktionen (SSF, SCF) erbringen können,
**dadurch gekennzeichnet, daß** die Kommunikationsmittel (IFSC) weiter so ausgestaltet sind, daß die Dienststeuerungseinheit (LSCP) mit der (ersten) Dienstvermittlungsstelle (LSSP) über die (erste) Schnittstelle (IFSC, IFSS) solche Daten austauschen kann, mit denen die (ersten) Telekommunikationsdienstfunktionen in einem Funktionsumfang (ASCF) erbracht werden können, der über einen durch Standardisierung festgelegten Funktionsumfang hinausgeht, und daß die Dienststeuerungseinheit (LSCP) Mittel aufweist, die so ausgestaltet sind, daß die Dienststeuerungseinheit (LSCP) und die (erste) Dienstvermittlungsstelle (LSSP) durch Zusammenwirken die (ersten) Telekommunikationsdienstfunktionen erbringen können, deren Funktionsumfang über einen durch Standardisierung festgelegten Funktionsumfang hinausgeht.

9. Dienstvermittlungsstelle (LSSP) zum Bereitstellen von Telekommunikationsdiensten in einem Telekommunikationsnetz (TNET), wobei die Dienstvermittlungsstelle (LSSP) über eine Schnittstelle (IFSC, IFSS) mit einer Dienststeuerungseinheit (LSCP) verbunden ist und wobei die Dienstvermittlungsstelle (LSSP) Kommunikationsmittel (IFSS) aufweist, die so ausgestaltet sind, daß über die Schnittstelle (IFSC, IFSS) Daten mit der Dienststeuerungseinheit (LSCP) Daten ausgetauscht werden können, mit denen die Dienststeuerungseinheit (LSCP) und die Dienstvermittlungsstelle (LSSP) durch Zusammenwirken Telekommunikationsdienstfunktionen (SSF, SCF) erbringen können,
**dadurch gekennzeichnet, daß** die Kommunikationsmittel (IFSS) weiter so ausgestaltet sind, daß die Dienstvermittlungsstelle (LSSP) über die Schnittstelle (IFSC, IFSS) mit der Dienststeuerungseinheit (LSCP) solche Daten austauschen kann, mit denen die Telekommunikationsdienstfunktionen in einem Funktionsumfang (ASSF) erbracht werden können, der über einen durch Standardisierung festgelegten Funktionsumfang hinausgeht, und daß die Dienststeuerungseinheit (LSCP) Mittel aufweist, die so ausgestaltet sind, daß die Dienstvermittlungsstelle (LSSP) im Zusammenwirken mit der Dienststeuerungseinheit (LSCP) die Telekommunikationsdienstfunktionen in dem Funktionsumfang erbringen kann, der über einen durch Standardisierung festgelegten Funktionsumfang hinausgeht.

10. Kombinationsknoten aus einer Dienststeuerungseinheit (LSCP) nach Anspruch 8 und einer Dienstvermittlungsstelle (LSSP) nach Anspruch 9.
